# EUROPEAN PATENT SPECIFICATION

(11) **EP 2 728 216 B1**
(45) Date of publication and mention of the grant of the patent: **02.09.2020**
(21) Application number: 13190627.3
(22) Date of filing: 29.10.2013
(51) Int. Cl.: F16F 9/02, E05C 17/30

(54) **Telescopic spring unit with a control device**
Teleskopische Federeinheit mit einer Steuerungsvorrichtung
Unité de ressort télescopique avec dispositif de commande

(30) Priority: 30.10.2012 DK 201270666
(43) Date of publication of application: 07.05.2014
(73) Proprietor: VKR Holding A/S, 2970 Hørsholm (DK)
(72) Inventor: Bertram, Jacob, 8260 Viby J (DK); Jensen, Bent Kirk, 2000 Frederiksberg (DK)
(74) Representative: AWA Denmark A/S

(56) References cited:
- EP-A2- 0 300 489
- DE-A1-102013 100 061
- US-A- 5 659 925
- US-A1- 2006 000 057

## Description

The present invention relates to a telescopic assembly comprising a spring unit, preferably a gas spring, arranged in a cylinder, a piston rod being connected at one end to the spring unit and having a free end projecting out of the cylinder at one end thereof, and a locking device having a first end connected to the free end, a second end slidably riding on the cylinder, and stop means positioned at least at or near its second end, the second end of the locking device being positioned at or near the one end of the cylinder in an extended position of the assembly, the locking device comprising a force element urging the stop means against the one end of the cylinder. Particularly, the present invention relates to such a telescopic assembly for use in a roof window construction or a skylight window construction.

Gas springs are widely used to apply a force on a body, e. g. to open a hatch, a door or a window. When the hatch, door or window is in a fully open position, and the gas spring is fully extended, it may be desirable, or necessary, to engage a locking device to prevent accidential closing. One example is a roof window or a skylight window, which may be used as an exit for craftsmen or builders to gain access to the roof. Of safety reasons it is necessary that the window will stay in the open position, so the craftsmen will be able to return to the inside of the building. Even with a strong gas spring it cannot be guaranteed that the window will stay open as it may be influenced by strong wind loading on the window or a person who accidentially pushes the window or seeks support on the frame, and therefore some kind of locking device is necessary and in some countries a legislative demand.

WO 02/055819 A1 describes a gas spring comprising such a locking device. The locking device has a first end connected to a free end of a piston rod of the gas spring and a second end slidably riding on a cylinder of the gas spring. The locking device furthermore has stop means positioned at or near its second end and a resilient element adapted for urging said stop means against said one end of the cylinder. US 5 659 925 A which is considered to be the closest prior art, discloses a gas spring with a locking device according to the pre-amble of claim 1.

However, such a gas spring may be rather difficult for a user to compress, e. g. such as to close a hatch, a door or a window. Particularly, in most situations a user is forced to use both hands in order to disengage the locking device and compress the gas spring at the same time.

It is thus the object of the present invention to provide a telescopic assembly of the type mentioned initially with which the compression procedure is simplified, whilst still providing the possibility of locking the telescopic assembly in its fully extended position.

The object is met by a telescopic assembly of the type mentioned initially, which is characterized in that the locking device further comprises a control device for releasing the locking device, the control device comprising a release element arranged in such a way as to be movable between a first position in which the release element is inactive and a second position in which the release element counteracts the effect of the force element thus allowing the spring unit to be compressed.

Thereby, a telescopic assembly is provided with which the compression procedure becomes very simple and the time and effort necessary for the compression is reduced. The user may simply first move the release element to its second position or active position in which the locking device is deactivated in that the release element counteracts the effect of the force element, and then compress the telescopic assembly. In this way a user may operate the telescopic assembly one-handedly, which is particularly convenient when it is desired to close e.g. a hatch, a door or a window kept open by means of such a telescopic assembly.

In an embodiment the release element is movable between the first position and the second position by being rotatable about a pivot axis, thereby providing for a particlularly simple and robust way of making the release element movable.

In an embodiment the pivot axis is an excentrically arranged pivot axis, thereby providing for the possibility of adjusting the force with which the release element counteracts the effect of the force element by means of the choise of the exact position of the excentrically arranged pivot axis.

In an embodiment the release element comprises and edge adapted for being brought into contact with an edge of said one end of the cylinder when the cylinder is slid into the locking means during compression of the telescopic assembly such as to cause the release element to move between the second position and the first position. Thereby a telescopic assembly with a control means that is automatically reset when compressing the spring unit is achieved.

Furthermore, the release element may be a catch, a latch, a pawl or a pin.

In the embodiments the control device further comprises an operating device for operating the release element, thereby providing for a telescopic assembly in which the release element is particularly simple to operate.

In the embodiments the operating device comprises a contact surface adapted for being brought into contact with the release element when the operating device is operated such as to cause the release element to move from the first position to the second position. Thereby an operating device having a particularly simple structure may be provided.

Furthermore, the operating device may be a slide button or a push button.

In an embodiment the control device furthermore comprises at least one end stop defining an outer position of the operating device, whereby the movement of the operating device is restricted. Thereby it may be ensured that the release element is not moved beyond its first and/or second position and furthermore that the operating device itself is not dislodged from the locking device.

In an embodiment the release element and/or the operating device are made of a plastics material, thus providing for an inexpensive control device.

In the following detailed description the invention will be explained with the aid of examples and reference to the accompanying schematic drawing in which,
Fig. 1 is an exploded view of a telescopic assembly according to the invention.
Fig. 2 is a cross sectional view of a telescopic assembly according to the invention with a control device shown in the first position.
Fig. 3 is a persepctive side view of the telescopic assembly according to Fig. 2.
Fig. 4 is an enlarged view of the section V of Fig. 2, showing the control device of the telescopic assembly according to Fig. 2,
Fig. 5 is a cross sectional view of a telescopic assembly according to the invention with a control device shown in the second position counteracting the effect of the force element, and
Fig. 6 is a section of a skylight window construction provided with a telescopic assembly according to the invention.

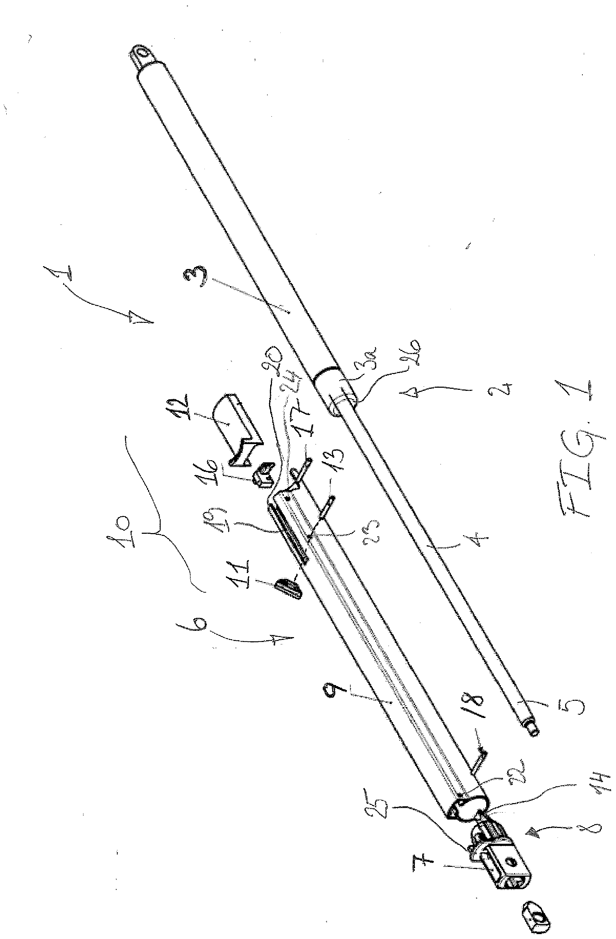

With reference to Figs. 1-5 an embodiment of a telescopic assembly 1 according to the invention is shown. As shown in Figs. 1-3 and 5 the telescopic assembly 1 comprises a spring unit, which in the embodiment shown is a gas spring 2. The gas spring 2 is arranged in a cylinder 3, and a piston rod 4 is connected at one end to a piston (not shown) arranged inside of the cylinder 3 of the spring unit 2. A free end 5 of the piston rod 4 opposite the end connected to the piston projects out of the cylinder 3 at one end 3a of the cylinder. The piston is acted on by a pressurized gas to urge the piston rod out of the cylinder 3 to a fully extended position of the free end 5 of the piston rod 4.

The telescopic assembly 1 further comprises a locking device 6. A first end of the locking device 6 is connected to the free end 5, and a second end of the locking device 6 is slidably riding on the cylinder 3. A stop means 20; 21 is positioned at least at or near the second end of the locking device 6, which second end is positioned at or near the one end 3a of the cylinder 3 in an extended position of the telescopic assembly 1. The locking device 6 further comprises a force element 8 urging the stop means 20; 21 against the the one end 3a of the cylinder 3.

In the embodiment shown in the figures the locking device 6 is provided as a cylindrical sleeve 9 arranged coaxially around the cylinder 3 such as to act as the locking device 6 in the fully extended position of the piston rod 4, as the locking device 6 has a stop means in the form of an edge 20 of the cylindrical sleeve 9 at a distance from the first end of the locking device 6 substantially corresponding to the distance from the free end 5 to the one end 3a of the cylinder 3 in a fully exteded position of the telescopic assembly 1. The edge 20 is adapted to abut on the one end 3a of the cylinder 3.

The locking device 6 further has force means 8 adapted to urge the edge 20 in a direction towards the one end 3a of the cylinder 3. The force means 8 comprises a plug 7 press fit into one end of the cylindrical sleeve 11 to obtain a firm connection and the plug 7 is again pivotably connected to the free end 5 of the piston rod 4. The plug 7 further comprises a resilient element 14 protruding from the plug 7 in direction of the cylinder 3 and acting on the piston rod 4 at a distance from the free end 5 to urge the plug 7 and therefore also the cylindrical sleeve 9 to have an angle with reference to an axial direction of the piston rod 4. The plug 7 and resilient element 14 may be formed in one piece, in which case the locking device 6 is very easy to assemble with the spring unit 2. The plug 7 may further have a circular abutment 25, which the cylindrical sleeve 9 abuts to ensure a firm connection and transfer of compression force from the cylindrical sleeve 9 to the connection at the free end 5 of the piston rod 4. The plug 7 may be attached to the sleeve 9 by means of a pin 18 extending through the plug 7 and attaching the plug 7 to the sleeve 9 by engagement with a hole 22.

The plug 7 may be formed of any suitable material, such as aluminium, but it is preferred to use a plastic material, e. g. POM, which will ensure a cheap and durable element for this specific purpose.

The cylindrical sleeve 9 must be formed of a material having a substantial rigidity to withstand buckling when the locking device is engaged. A suitable material for most applications will be aluminium, but if the safety demands are less strict the cylindrical sleeve 9 may be made of a plastic material.

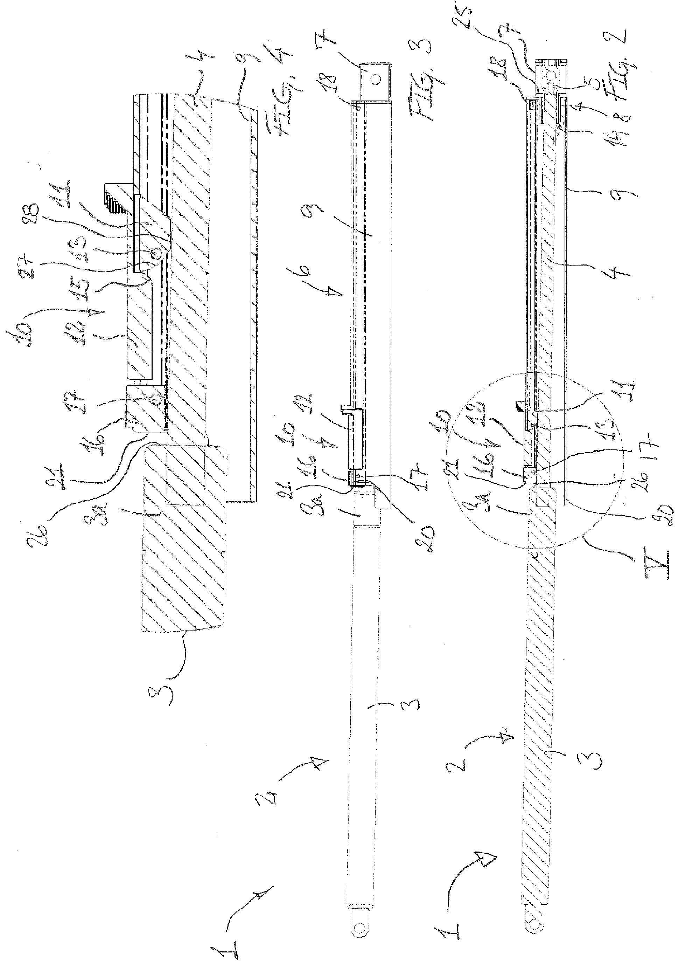

According to the invention and as shown in more detail in Fig. 4, the locking device 6 further comprises a control device 10 for releasing the locking device 6. The control device 10 comprises a release element 11, an operating device 12 and an end stop 16.

The release element 11 is arranged in such a way as to be movable between a first position in which said release element 11 is inactive and the locking means 6 thus remains in the position in which it locks the spring unit 2 and a second position in which the release element 11 is active in that it counteracts the effect of the force element 8 and thereby the effect of the locking means 6, thus unlocking the spring unit 2 allowing the spring unit 2 to be compressed.

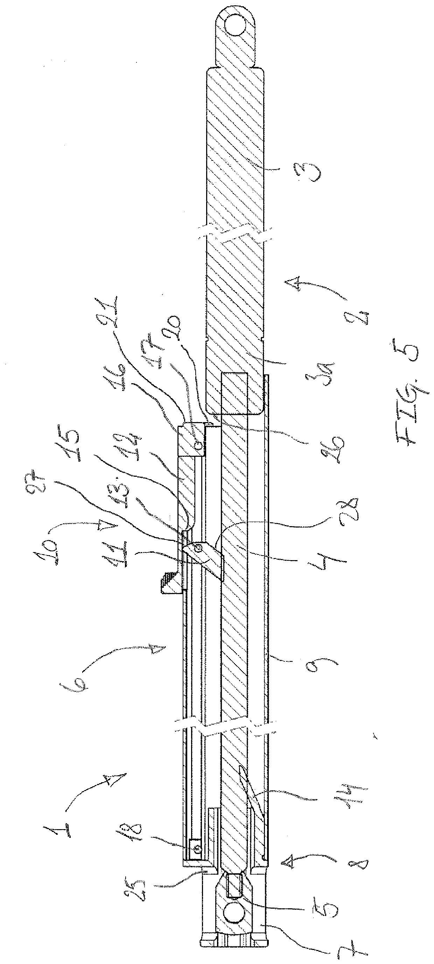

The release element 11 shown in the figures is arranged such as to be pivotable between the first position shown in Figs. 2 and 4 and the second position shown in Fig. 5 about an excentrically arranged axis 13 in the form of a pin extending through the release element 11 and attaching the release element 11 to the sleeve 9 by engagement with a hole 23. Furthermore the release element 11 shown is of a substantially trapezoid shape.

However, it is clear to the skilled person that the release element 11 may be provided with any other suitable shape, such as e.g. rectangular, oval or another suitable number of edges than four. Also, one or more of the edges of the release element 11 may be rounded. Also, the release element may be movable between the first position and the second position in any other suitable way, such as by being linearly or stepwise displaceable.

The operating device 12, is provided as a slide button arranged on the sleeve 9 and comprises an abutment edge 15 adapted for abutment with the release element 11. The operating device 12 is arranged such as to be linearly slidable in a slot 19 provided in the sleeve 9 between a first position (Figs. 2 and 4) and a second position (Fig. 5). In the first position of the operating device 12 the abutment edge 15 and the release element 11 are not abutting each other, thus corresponding to the first and inactive position of the release element 11. When sliding the operating device 12 from the first position towards the second position, the abutment edge 15 is brought into abutment with an edge 27 of the release element 11 and the release element is rotated into its second and active position. The telescopic assembly 1 may thus be compressed.

An automatic return movement of the release element 11 and the operating device 12 is provided for. When compressing the telescopic assembly 1 the piston rod 4 is pressed into the cylinder 3 which in turn is pressed into the cylindrical sleeve 9. This causes the free edge 26 of the one end 3a of the cylinder 3 to come into contact with an edge 28 of the release element 11. Thereby the release element 11 is moved back from its second position to its first position. This movement of the release element 11 in turn causes the release element to push to the abutment edge 15 of the operating device 12, which is consequently returned from its second position to its first position. When compressing the telescopic assembly 1, the control element 10 is thus automatically reset such that the locking device 6 may function normally when the telesopic assembly 1 is extended again.

It is, however, clear to the skilled person that the operating device may be adapted for operating the release element in any other suitable way, such as e.g. a rotary button. Particularly, in case of a release element being linearly or stepwise displaceable, the operating device may be provided as a push button and the return movement of the operating device may be provided by means of the release element being biased towards its first, inactive position.

The end stop 16, which is also optional but preferred in embodiments of the telescopic assembly 1 having an operating device 12, is provided such as to restrict the movement of the operating device 12 and to ensure that the operating device 12 is not slid out of the slot 19 in the sleeve 9, thus preventing the oprating device 12 from falling off of the cylindrical sleeve 9. The end stop 16 is attached to the sleeve 9 by means of a pin 17 extending through the end stop 16 and attaching the end stop 16 to the sleeve 9 by engagement with a hole 24. The end stop 16 may be made of any suitable material such as plastics or a metal. Furthermore, when an end stop 16 is provided the stop means may be provided as an edge 21 of the end stop, rather than an edge 20 of the cylindrical sleeve 9.

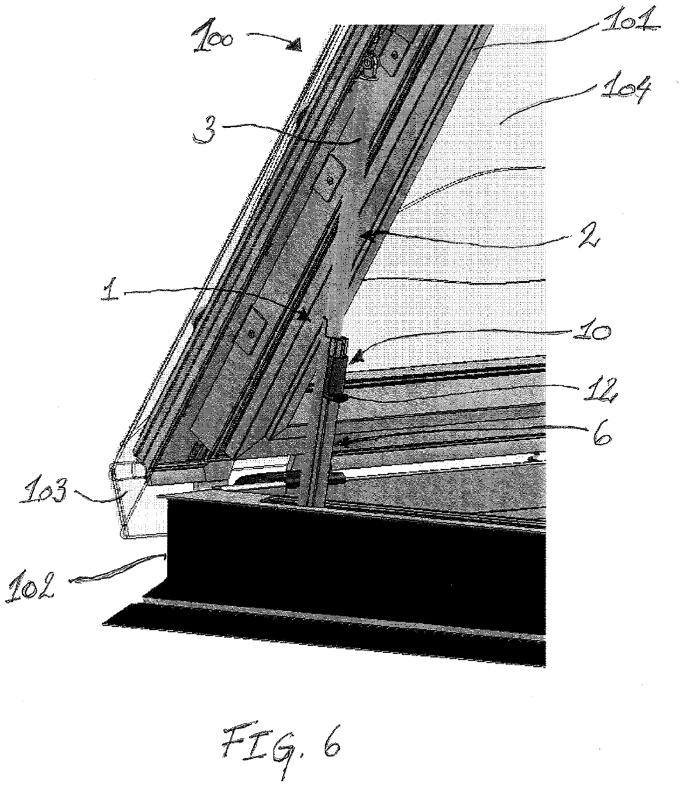

Turning now to Fig. 6 an example of the use of a telescopic assembly 1 according to the invention for a window construction is shown. The window construction 100 shown in Fig. 6 is a skylight window construction, and comprises a sash 101, a frame 102, a pane 104 mounted in the sash 101 and a weather shield 103. The sash 101 is pivotable with respect to the frame 102 such as to enable the window construction 100 to be opened and closed. A telescopic assembly 1 according to the invention is arranged extending between the frame 102 and the sash 101 such that the cylinder 3 is attached to the sash 101 and the free end 5 of the piston rod 4 enclosed by the locking device 6 is attached to the frame 102. It is also feasible that the cylinder 3 is attached to the frame 102 and the free end 5 of the piston rod 4 enclosed by the locking device 6 is attached to the sash 101. It is noted that the window construction may just as well be a roof window construction, in which case no weather shield is present.

When a user opens the window construction 100, the spring unit 2 of the telescopic assembly 1 is extended to its fully extended position, and the locking device 6 is automatically activated to lock the telescopic assembly 1. Consequently the control device 10 is not activated, meaning that the release element 11 is in its first, inactive position. The operating device 12 is thus likewise in its first position.

When the user desires to close the window construction 100, he or she first activates the control device 10 by sliding the operating device 12 to its second position, thereby moving the releasse element 11 into its second, active position. Thereby the cylinder 3 and the sleeve 9 of the telescopic assembly 1 are arranged coaxially. Thereupon the user may readily close the window construction 100 as the cylinder 3 may now be slid into the sleeve 9, whereby the spring unit 2 is compressed. As described above this in turn causes a return movement of the release element 11 and the operating device 12, which are consequently both returned to their respective first positions. When compressing the telescopic assembly 1, the control element 10 is thus automatically reset such that the locking device 6 may again be automatically activated to lock the telescopic assembly 1 the next time the window construction 100 is opened.

Finally, it should be noted that the above description of preferred embodiments serves only as an example, and that a worker skilled in the art will know that numerous variations are possible without deviating from the scope of the claims.

## Claims

1. A telescopic assembly (1) comprising a spring unit (2), preferably a gas spring, arranged in a cylinder (3), a piston rod (4) being connected at one end to said spring unit (2) and having a free end (5) projecting out of the cylinder (3) at one end (3a) thereof, and a locking device (6) having a first end connected to said free end (5), a second end slidably riding on said cylinder (3), and stop means (20; 21) positioned at least at or near its second end, said second end of said locking device (6) being positioned at or near said one end (3a) of said cylinder (3) in an extended position of the telescopic assembly (1), the locking device comprising (6) a force element (8) urging said stop means (20; 21) against said said one end (3a) of said cylinder (3), wherein said locking device (6) further comprises a control device (10) for releasing said locking device (6), said control device (10) comprising a release element (11) arranged in such a way as to be movable between a first position in which said release element (11) is inactive and a second position in which said release element (11) counteracts the effect of said force element (8) thus allowing said spring unit (2) to be compressed, **character- ized** in that said control device (10) further comprises an operating device (12) for operating said release element (11), and that said operating device (12) comprises a contact surface (15) adapted for being brought into contact with said release element (11) when said operating device (12) is operated such as to cause said release element (11) to move between said first position and said second position.

2. A telescopic assembly according to claim 1, **characterized in that** said release element (11) is movable between said first position and said second position by being rotatable about a pivot axis (13).

3. A telescopic assembly according to claim 2, **characterized in that** said pivot axis (13) is an excentrically arranged pivot axis.

4. A telescopic assembly according to any one of the above claims, **characterized in that** said release element (11) is a catch, a latch, a pawl or a pin.

5. A telescopic assembly according to any one of the above claims, **characterized in that** said release element (11) comprises and edge (28) adapted for being brought into contact with an edge (26) of said one end (3a) of said cylinder (3) when said cylinder (3) is slid into said locking means (6) during compression of said telescopic assembly (1) such as to cause said release element (11) to move between said second position and said first position.

6. A telescopic assembly according to any one of the preceding claims, **characterized in that** said control device (10) furthermore comprises at least one end stop (16) defining an outer position of said operating device (12).

7. A telescopic assembly according to any one of the above claims, **characterized in that** said operating device (12) is a slide button or a push button.

8. A telescopic assembly according to any one of the above claims, **characterized in that** said release element (11) and/or said operating device (12) are made of a plastics material.

## Patentansprüche

1. Teleskopanordnung (1) umfassend eine Federeinheit (2), vorzugsweise eine Gasfeder, die in einem Zylinder (3) angeordnet ist, eine Kolbenstange (4), die an einem Ende der Federeinheit (2) verbunden ist und ein freies Ende (5) aufweist, das aus dem Zylinder (3) an einem Ende (3a) davon hervorragt, und eine Verriegelungsvorrichtung (6), die ein erstes Ende, das mit dem freien Ende (5) verbunden ist, ein zweites Ende, das verschiebbar auf dem Zylinder (3) sitzt, und Anschlagmittel (20; 21), die zumindest an oder nahe ihrem zweiten Ende positioniert sind, aufweist, wobei das zweite Ende der Verriegelungsvorrichtung (6) an oder nahe dem einen Ende (3a) des Zylinders (3) in einer ausgezogenen Position der Teleskopanordnung (1) positioniert ist, wobei die Verriegelungsvorrichtung (6) ein Kraftelement (8) umfasst, das die Anschlagmittel (20; 21) gegen das eine Ende (3a) des Zylinders (3) drückt, wobei die Verriegelungsvorrichtung (6) ferner eine Steuervorrichtung (10) zum Freigeben der Verriegelungsvorrichtung (6) umfasst, wobei die Steuervorrichtung (10) ein Freigabeelement (11) umfasst, das derart angeordnet ist, dass es zwischen einer ersten Position, in der das Freigabeelement (11) inaktiv ist, und einer zweiten Position, in der das Freigabeelement (11) der Wirkung des Kraftelements (8) entgegenwirkt, wodurch die Federeinheit (2) zusammengedrückt werden kann, bewegbar ist, **dadurch gekennzeichnet, dass** die Steuervorrichtung (10) ferner eine Betätigungsvorrichtung (12) zum Betätigen des Freigabeelements (11) umfasst, und dass die Betätigungsvorrichtung (12) eine Kontaktfläche (15) umfasst, die ausgelegt ist, mit dem Freigabeelement (11) in Kontakt gebracht zu werden, wenn die Betätigungsvorrichtung (12) derart betätigt wird, dass bewirkt wird, dass sich das Freigabeelement (11) zwischen der ersten Position und der zweiten Position bewegt.

2. Teleskopanordnung nach Anspruch 1, **dadurch gekennzeichnet, dass** das Freigabeelement (11) zwischen der ersten Position und der zweiten Position bewegbar ist, indem es um eine Schwenkachse (13) drehbar ist.

3. Teleskopanordnung nach Anspruch 2, **dadurch gekennzeichnet, dass** die Schwenkachse (13) eine exzentrisch angeordnete Schwenkachse ist.

4. Teleskopanordnung nach einem der obigen Ansprüche, **dadurch gekennzeichnet, dass** das Freigabeelement (11) eine Falle, ein Riegel, eine Sperrklinke oder ein Bolzen ist.

5. Teleskopanordnung nach einem der obigen Ansprüche, **dadurch gekennzeichnet, dass** das Freigabeelement (11) eine Kante (28) umfasst, die ausgelegt ist, mit einer Kante (26) des einen Endes (3a) des Zylinders (3) in Kontakt gebracht zu werden, wenn der Zylinder (3) in das Verriegelungsmittel (6) während Zusammendrücken der Teleskopanordnung (1) derart geschoben wird, dass bewirkt wird, dass sich das Freigabeelement (11) zwischen der zweiten Position und der ersten Position bewegt.

6. Teleskopanordnung nach einem der vorhergehenden Ansprüche, **dadurch gekennzeichnet, dass** die Steuervorrichtung (10) ferner mindestens einen Endanschlag (16) umfasst, der eine äußere Position der Betätigungsvorrichtung (12) definiert.

7. Teleskopanordnung nach einem der obigen Ansprüche, **dadurch gekennzeichnet, dass** die Betätigungsvorrichtung (12) eine Schiebetaste oder eine Drucktaste ist.

8. Teleskopanordnung nach einem der obigen Ansprüche, **dadurch gekennzeichnet, dass** das Freigabeelement (11) und/oder die Betätigungsvorrichtung (12) aus einem Kunststoffmaterial hergestellt sind.

## Revendications

1. Ensemble télescopique (1) comprenant une unité de ressort (2), de préférence un ressort à gaz, agencée dans un cylindre (3), une tige de piston (4) étant reliée à une extrémité à ladite unité de ressort (2) et ayant une extrémité libre (5) faisant saillie hors du cylindre (3) à une extrémité (3a) de celui-ci, et un dispositif de verrouillage (6) ayant une première extrémité reliée à ladite extrémité libre (5), une seconde extrémité se déplaçant de manière coulissante sur ledit cylindre (3), et des moyens d'arrêt (20 ; 21) positionnés au moins à ou près de leur seconde extrémité, ladite seconde extrémité dudit dispositif de verrouillage (6) étant positionnée à ou près de ladite une extrémité (3a) dudit cylindre (3) dans une position étendue de l'ensemble télescopique (1), le dispositif de verrouillage comprenant (6) un élément de force (8) poussant lesdits moyens d'arrêt (20 ; 21) contre ladite une extrémité (3a) dudit cylindre (3), ledit dispositif de verrouillage (6) comprenant en outre un dispositif de commande (10) pour libérer ledit dispositif de verrouillage (6), ledit dispositif de commande (10) comprenant un élément de libération (11) agencé de manière à être mobile entre une première position dans laquelle ledit élément de libération (11) est inactif et une seconde position dans laquelle ledit élément de libération (11) s'oppose à l'effet dudit élément de force (8), permettant ainsi à ladite unité de ressort (2) d'être comprimée, **caractérisé en ce que** ledit dispositif de commande (10) comprend en outre un dispositif d'actionnement (12) pour actionner ledit élément de libération (11), et **en ce que** ledit dispositif d'actionnement (12) comprend une surface de contact (15) adaptée pour être mise en contact avec ledit élément de libération (11) lorsque ledit dispositif d'actionnement (12) est actionné de manière à amener ledit élément de libération (11) à se déplacer entre ladite première position et ladite seconde position.

2. Ensemble télescopique selon la revendication 1, **caractérisé en ce que** ledit élément de libération (11) est mobile entre ladite première position et ladite seconde position en pouvant tourner autour d'un axe de pivotement (13).

3. Ensemble télescopique selon la revendication 2, **caractérisé en ce que** ledit axe de pivot (13) est un axe de pivot agencé de manière excentrique.

4. Ensemble télescopique selon l'une quelconque des revendications précédentes, **caractérisé en ce que** ledit élément de libération (11) est un loquet, un verrou, un cliquet ou une goupille.

5. Ensemble télescopique selon l'une quelconque des revendications précédentes, **caractérisé en ce que** ledit élément de libération (11) comprend un bord (28) adapté pour être mis en contact avec un bord (26) de ladite une extrémité (3a) dudit cylindre (3) lorsque ledit cylindre (3) est glissé dans ledit moyen de verrouillage (6) pendant la compression dudit ensemble télescopique (1) de manière à amener ledit élément de libération (11) à se déplacer entre ladite seconde position et ladite première position.

6. Ensemble télescopique selon l'une quelconque des revendications précédentes, **caractérisé en ce que** ledit dispositif de commande (10) comprend en outre au moins une butée d'extrémité (16) définissant une position extérieure dudit dispositif d'actionnement (12).

7. Ensemble télescopique selon l'une quelconque des revendications précédentes, **caractérisé en ce que** ledit dispositif d'actionnement (12) est un bouton coulissant ou un bouton poussoir.

8. Ensemble télescopique selon l'une quelconque des revendications précédentes, **caractérisé en ce que** ledit élément de libération (11) et/ou ledit dispositif d'actionnement (12) sont réalisés en matière plastique.
